# EUROPEAN PATENT APPLICATION

(11) **EP 4 535 372 A1**
(43) Date of publication of application: **09.04.2025**
(21) Application number: 23816301.8
(22) Date of filing: 25.05.2023
(51) Int. Cl.: G21D 3/00, G21C 1/32

(54) **NUCLEAR POWER PLANT OPERATION METHOD CONSIDERING FATIGUE STATE OF SMALL MODULAR NUCLEAR REACTOR**

(30) Priority: 31.05.2022 KR 20220066452
(71) Applicant: Korea Hydro & Nuclear Power Co., Ltd, Gyeongju-si, Gyeongsangbuk-do 38120 (KR)
(72) Inventor: KIM, Tae Soon, Cheongju-si, Chungcheongbuk-do 28382 (KR); CHOI, Sun Mi, Daejeon 34070 (KR); NAM, Hyun Suk, Sejong 30127 (KR)
(74) Representative: Habermann, Hruschka & Schnabel
(86) International application number: PCT/KR2023/007205
(87) International publication number: WO 2023/234640

(57) **Abstract**

The present invention provides a method of operating a nuclear power plant, considering a fatigue state of a small modular nuclear reactor, the nuclear power plant including a plurality of small modular nuclear reactors, the method comprising: a monitoring step of monitoring a fatigue state of each of the small modular nuclear reactors; an analyzing step of, when a problematic small modular nuclear reactor, the fatigue state of which has been determined to be a predetermined level or more, is identified, analyzing whether the problematic small modular nuclear reactor is operable by considering the driving state of the problematic small modular nuclear reactor; a diagnosing step of diagnosing cumulative fatigue states of the remaining small modular nuclear reactors when the problematic small modular nuclear reactor has been determined to be inoperable; and a flexible operation step of adjusting outputs of the remaining small modular nuclear reactors on the basis of the accumulative fatigue state derived in the diagnosing step.

## Description

### Technical Field

The disclosure relates to a method of operating a nuclear power plant considering a fatigue state of a small modular reactor.

### Background Art

Technology of small modular reactors (SMR) has recently been very actively developed both domestically and overseas, and some countries advanced in nuclear power plants have already entered an SMR construction stage.

In most of the SMR, multiple reactors (Rx), ranging from several unit reactors to more than 10 unit reactors, are arranged simultaneously in a module format.

This arrangement is advantageous to respond more elastically and flexibly to power supply and demand situations.

However, the existing SMR has a problem in that a fatigue state of each unit reactor is not adequately monitored or reflected in flexible operation.

### Disclosure

### Technical Problem

An aspect of the disclosure is to provide a method of operating a nuclear power plant considering a fatigue state of a small modular reactor.

### Technical Solution

The aspect of the disclosure is achieved by a nuclear power plant operating method a considering a fatigue state of a small modular reactor, in which the small modular reactor includes a plurality of small modular reactors, the method including: a monitoring step of monitoring the fatigue state of the small modular reactor; an analyzing step of analyzing whether a problematic small modular reactor, the fatigue state of which is higher than or equal to a certain level, is operatable considering an operation state of the problematic small modular reactor; a diagnosing step of diagnosing cumulative fatigue states of the remaining small modular reactors upon analyzing that the problematic small modular reactor is not operable; and a flexible operation step of controlling outputs of the remaining small modular reactors based on the cumulative fatigue states diagnosed in the diagnosing step.

In the monitoring step, the fatigue state may be monitored by measuring at least one of stress and frequency of the small modular reactor.

The operation state may include at least one among the number of temperature settings, the number of pressure settings, a temperature history, a pressure history, an operation history, an output state, and a required output state of the problematic small modular reactor.

The cumulative fatigue state may be diagnosed based on at least one of the number of temperature settings and the number of pressure settings for each of the remaining small modular reactors.

In the flexible operation step, an output of a small modular reactor having a lower cumulative fatigue usage factor may be increased to uniformly apply the cumulative fatigue states to the remaining small modular reactors.

### Advantageous Effects

According to the disclosure, there are provided a nuclear power plant with small modular reactors (SMR) placed in a cooling pool, and a maintenance method thereof.

### Description of Drawings

FIG. 1 is a flowchart showing a method of operating a nuclear power plant considering a fatigue state of a small modular reactor according to an embodiment of the disclosure, and
FIG. 2 illustrates a flexible operation of a small modular reactor according to an embodiment of the disclosure.

### Mode for Invention

Below, the disclosure will be described in more detail with reference to the accompanying drawings. The accompanying drawings are merely an example illustrated to describe the technical concept of the disclosure in more detail, and thus the technical concept of the disclosure is not limited to the accompanying drawings.

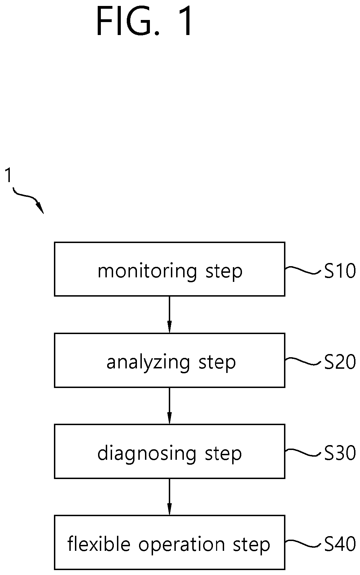

A method of operating a nuclear power plant considering a fatigue state of a small modular reactor will be described with reference to FIG. 1.

According to the disclosure, a "nuclear power plant" includes a plurality of small modular reactors. Each small modular reactor may be referred to as a "unit reactor."

FIG. 1 is a flowchart showing a method of operating a nuclear power plant considering a fatigue state of a small modular reactor according to an embodiment of the disclosure.

The operation method according to this embodiment includes a monitoring step S10, an analyzing step S20, a diagnosing step S30, and a flexible operation step S40.

In the monitoring step S10, a fatigue state of a small modular reactor is monitored.

The fatigue state is monitored by a fatigue monitoring system (FMS) connected to each small modular reactor.

The fatigue monitoring system measures the stress and/or frequency for each unit reactor to monitor fatigue. The fatigue may be monitored at certain time intervals or continuously.

When the measured stress or frequency deviates from predetermined set values, it is identified that the fatigue state is higher than or equal to a certain level.

Here, the stress may be the number of stress changes, and the set value for the number of stress changes or the set value for the frequency may be varied depending on the operating states or device characteristics of each small modular reactor.

According to an alternative embodiment, it may be identified that the fatigue state is higher than or equal to a certain level only when both the stress and the frequency deviate a predetermined set value.

In the analyzing step S20, the operation state of a problematic small modular reactor, the fatigue state of which is identified to be higher than or equal to a certain level, is analyzed.

The operation state may include, but not limited to, at least one among the number of temperature settings, the number of pressure settings, a temperature history, a pressure history, an operation history, an output state, and a required output state of the problematic small modular reactor.

In the analyzing step S20, artificial intelligence that reflects the operation experience of the nuclear power plant may be used, and it is identified whether the problematic small modular reactor is operable.

The operation experience refers to a degree of fatigue of when a fatigue crack occurs, which is acquired in a previous nuclear power plant.

The degree of fatigue may be measured based on the frequency or the stress, and may also be identified by the number of changes (or cycles) in temperature and pressure.

When the number of changes (or cycles) in the temperature and pressure of the small modular reactor is more than the number of changes, which are caused by operations suggested under an initial design condition for a certain period of time, it may be identified that the degree of fatigue is high.

However, the operation experience is not limited to the foregoing example, but may further include a surrounding environmental factor that affects the fatigue. The surrounding environmental factor may be varied in weight reflected thereto depending on the effects on the degree of fatigue.

Whether the small modular reactor is operable refers to whether the small modular reactor is in the state of being able to maintain and control the required output while operating.

The standards for identifying whether the small modular reactor is able to maintain and control the output may be continuously monitored as compared with the acceptable standards for a cumulative fatigue usage factor given when designed, to some extent that the output required for and assigned to each unit reactor does not damage the structure and fatigue soundness of each unit reactor.

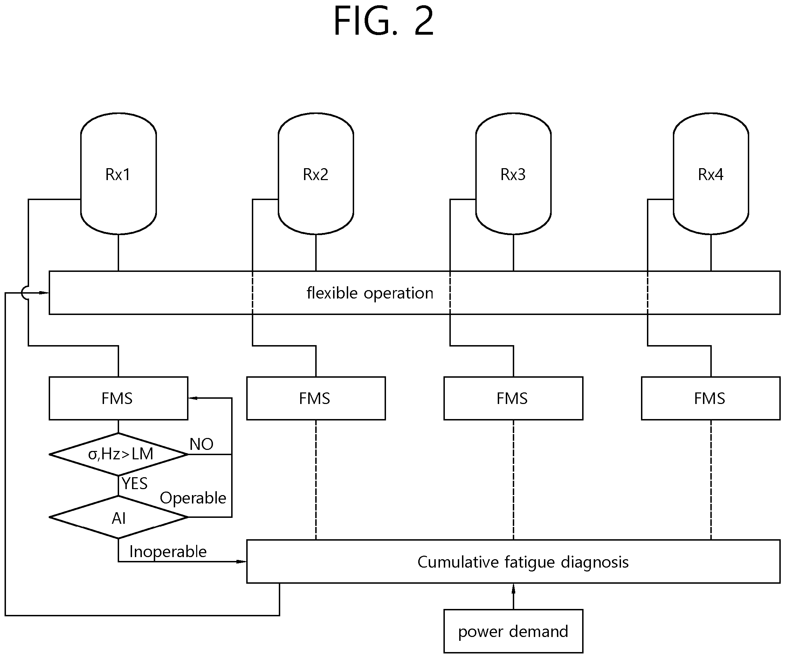

Below, the diagnosing step S30 and the flexible operation step S40 will be described with reference to FIG. 2. FIG. 2 illustrates a flexible operation of a small modular reactor according to an embodiment of the disclosure.

In the diagnosing step S30, when it is identified that the problematic small modular reactor is not operable, the cumulative fatigue states of the remaining small modular reactors are diagnosed.

The cumulative fatigue states of the remaining small modular reactors may be identified based on the number of temperature settings and/or the number of pressure settings for each small modular reactor.

Alternatively, the cumulative fatigue state may be identified based on a cumulative fatigue usage factor (CUF). The cumulative fatigue usage factor refer to a factor that indicates a ratio of the current cumulative fatigue life to the allowed fatigue life set when the construction is designed, which is required to be maintained lower than 1.

In the flexible operation step S40, the output of each small modular reactor is controlled based on the cumulative fatigue state diagnosed in the diagnosing step S30.

Here, the cumulative fatigue state may be the cumulative fatigue usage factor.

The unit reactors having a high cumulative fatigue usage factor are controlled to decrease their output values or stop operating, and the unit reactors having a low cumulative fatigue usage factor are controlled to increase or maintain their output values, so that the small modular reactors can be equal in the cumulative fatigue state, thereby further maintaining the fatigue life to be uniform.

For example, a small modular nuclear power plant with four unit reactors calculates the fatigue lives of the unit reactors with respect to the total required power generation, and controls the unit reactor having a relatively low cumulative fatigue usage factor to increase its output.

Therefore, the overall fatigue life of the small modular reactors is improved by establishing an operation strategy optimized for the fatigue characteristics of the small modular reactors.

According to the disclosure, a function of analyzing an operation experience history is added to the fatigue monitoring system to predict failure in advance.

To maximize the advantages of the small modular reactor suitable for the flexible operation, multiple portions vulnerable to the fatigue, which are scattered in each unit reactor, are maintained to have an even cumulative fatigue usage factor, thereby uniformizing the fatigue lives of the unit reactors.

Although a few embodiments of the disclosure have been described above in detail, it is apparent to a person having ordinary knowledge in the art that such embodiments are merely exemplary embodiments and do not limit the scope of the disclosure. Therefore, the substantial scope of the disclosure is defined by appended claims and their equivalents.

## Claims

1. A nuclear power plant operating method a considering a fatigue state of a small modular reactor, in which the small modular reactor comprises a plurality of small modular reactors, the method comprising:
a monitoring step of monitoring the fatigue state of the small modular reactor;
an analyzing step of analyzing whether a problematic small modular reactor, the fatigue state of which is higher than or equal to a certain level, is operatable considering an operation state of the problematic small modular reactor;
a diagnosing step of diagnosing cumulative fatigue states of the remaining small modular reactors upon analyzing that the problematic small modular reactor is not operable; and
a flexible operation step of controlling outputs of the remaining small modular reactors based on the cumulative fatigue states diagnosed in the diagnosing step.

2. The nuclear power plant operating method of claim 1, wherein, in the monitoring step, the fatigue state is monitored by measuring at least one of stress and frequency of the small modular reactor.

3. The nuclear power plant operating method of claim 1, wherein the operation state comprises at least one among the number of temperature settings, the number of pressure settings, a temperature history, a pressure history, an operation history, an output state, and a required output state of the problematic small modular reactor.

4. The nuclear power plant operating method of claim 1, wherein the cumulative fatigue state is diagnosed based on at least one of the number of temperature settings and the number of pressure settings for each of the remaining small modular reactors.

5. The nuclear power plant operating method of claim 1, wherein, in the flexible operation step, an output of a small modular reactor having a lower cumulative fatigue usage factor is increased to uniformly apply the cumulative fatigue states to the remaining small modular reactors.
